# FASCICULE DE BREVET EUROPEEN

(11) **EP 4 433 360 B1**
(45) Date de publication et mention de la délivrance du brevet: **22.10.2025**
(21) Numéro de dépôt: 22814136.2
(22) Date de dépôt: 16.11.2022
(51) Int. Cl.: B64C 11/06, B64C 11/20, F01D 5/30

(54) **MODULE DE MONTAGE D'UNE AUBE DE SOUFFLANTE DE TURBOMACHINE**
MODUL ZUR MONTAGE EINER BLÄSERSCHAUFEL EINER TURBOMASCHINE
MODULE FOR MOUNTING A TURBOMACHINE FAN BLADE

(30) Priorité: 19.11.2021 FR 2112278
(43) Date de publication de la demande: 25.09.2024
(73) Titulaire: SAFRAN AIRCRAFT ENGINES, 75015 Paris (FR)
(72) Inventeur: FRANTZ, Caroline, Marie, 77550 MOISSY-CRAMAYEL (FR); MILLIER, Vincent, François, Georges, 77550 MOISSY-CRAMAYEL (FR); RODA, Jean, Charles, Olivier, 77550 MOISSY-CRAMAYEL (FR)
(74) Mandataire: Cabinet Beau de Loménie
(86) Numéro de dépôt international: PCT/FR2022/052109
(87) Numéro de publication internationale: WO 2023/089274

(56) Documents cités:
- EP-A2- 2 535 519
- FR-A1- 2 944 774
- FR-A1- 3 040 191
- FR-A1- 3 106 364
- US-A1- 2014 003 945

## Description

### Domaine technique

Le présent exposé concerne un module de montage d'une aube de soufflante de turbomachine, un ensemble à calage variable comprenant un tel module et une soufflante de turbomachine comprenant un tel ensemble.

L'invention s'applique notamment aux turbomachines aéronautiques.

### Technique antérieure

Certains turboréacteurs comprennent une soufflante à calage variable dans laquelle un changement de calage ou d'orientation des aubes de la soufflante est réalisé afin de gérer la poussée du turboréacteur de manière appropriée selon les phases de vol de l'aéronef équipé d'un tel turboréacteur.

Une soufflante à calage variable comprend généralement un moyeu qui s'étend circonférentiellement autour d'un axe longitudinal de rotation de la soufflante et les aubes de la soufflante sont montées à la périphérie du moyeu. Plus particulièrement, le moyeu comprend une pluralité de bouches de moyeu réparties circonférentiellement à la périphérie du moyeu et qui comportent chacune une ouverture orientée radialement relativement à l'axe longitudinal. Les aubes sont montées chacune au niveau de leur pied dans une bouche de moyeu par l'intermédiaire d'un pivot recevant le pied de l'aube et équipé de roulements à billes permettant de reprendre l'ensemble des efforts auxquels l'aube en fonctionnement est soumise.

L'ensemble appelé cartouche de roulements qui est formé par le pivot d'une aube et la partie formant les roulements associés au pivot d'aube est monté par l'intérieur dans une bouche du moyeu, tandis que le pivot d'aube est monté dans la cartouche, par l'extérieur pour venir se positionner et être maintenu serré à l'intérieur de la cartouche de roulements. L'aube, quant à elle, est montée sur le pivot depuis l'extérieur de la bouche de moyeu. De manière générale, la rétention radiale des aubes est assurée par la forme du pied de l'aube et de l'alvéole qui l'accueille, le pivot et ses roulements, le moyeu dans lequel s'intègre le pivot et le carter externe de la soufflante. La bouche de moyeu comporte intérieurement une butée radiale qui permet de s'assurer du maintien en position radiale du pivot lors de la mise en opération de la soufflante, notamment afin d'éviter tout déplacement radial de l'ensemble (pivot et roulements), en éloignement de l'axe longitudinal, sous l'effet des forces centrifuges dues à la rotation de la soufflante. Un mécanisme interne au moyeu permet de faire pivoter chaque pivot d'aube sur commande et donc de faire pivoter l'aube portée par le pivot.

Lors du montage du pivot de l'aube dans la cartouche depuis l'extérieur de la bouche de moyeu, depuis l'extérieur de cette dernière, il est nécessaire de coupler la partie inférieure du pivot à une pièce du mécanisme de pivotement afin d'empêcher le retrait du pivot hors de la bouche suivant l'axe radial de celle-ci, sous l'action des forces centrifuges qui apparaissent lors de la mise en rotation du moyeu. Ce couplage est réalisé en intervenant depuis l'intérieur du moyeu et en solidarisant le pivot et la pièce du mécanisme grâce à un ou plusieurs organes de couplage qui forment en outre une butée axiale sur la cartouche de roulements. Cette opération est délicate à réaliser lors du premier montage de la soufflante mais s'avère encore plus problématique lorsqu'elle intervient lors d'opérations de maintenance (pour diverses raisons telles que par exemple suite à une ingestion d'oiseau) et que le support d'aube doit être démonté, inspecté puis réparé ou remplacé, et remonté.

Ces opérations de démontage et remontage s'avèrent longues et complexes et ne peuvent pas toujours être réalisées facilement en fonction des circonstances dans lesquelles les opérations de maintenance doivent intervenir.

Le document EP 2 535 519 A2 divulgue un module de montage d'une aube de soufflante de turbomachine.

Au vu de ce qui précède il serait donc utile de disposer d'une architecture permettant de monter et démonter les supports d'aubes de soufflante plus facilement que dans l'art antérieur.

### Exposé de l'invention

L'invention a ainsi pour objet un module de montage d'une aube de soufflante pour turbomachine comprenant:
- un dispositif de reprise d'effort d'aube,
- un support d'aube destiné à supporter une aube de soufflante et apte à pivoter autour d'un axe radial A, le support d'aube étant configuré pour être engagé axialement suivant l'axe radial A à l'intérieur du dispositif de reprise d'effort d'aube, le support d'aube et le dispositif de reprise d'effort d'aube étant mutuellement configurés pour assurer, d'une part, un serrage du support d'aube contre le dispositif et, d'autre part, une retenue axiale suivant l'axe radial A du support d'aube à l'intérieur du dispositif afin d'empêcher tout mouvement de désengagement axial du support d'aube par rapport au dispositif, le support d'aube et le dispositif comportant chacun, sur leurs surfaces respectives destinées à coopérer l'une avec l'autre, une alternance de portées coniques et d'évidements permettant alternativement, d'une part, lorsque les évidements d'une des deux surfaces respectives sont en correspondance géométrique avec les portées coniques de l'autre surface, de faire coulisser axialement le support d'aube par rapport au dispositif et, d'autre part, lorsque les portées coniques des deux surfaces respectives sont en correspondance géométrique les unes avec les autres, d'empêcher tout mouvement de coulissement axial du support d'aube par rapport au dispositif.

L'architecture proposée ci-dessus permet de monter et démonter (notamment verrouiller et déverrouiller) depuis l'extérieur de la bouche de moyeu du moyeu d'une soufflante, plus simplement que dans l'art antérieur, le support d'aube par rapport au dispositif de reprise d'effort d'aube en place dans la bouche de moyeu. Il n'est ainsi plus nécessaire d'accéder à l'intérieur du moyeu pour coupler/découpler mécaniquement le support d'aube par rapport au mécanisme de pivotement du support interne au moyeu. Selon cette architecture le support d'aube est engagé à l'intérieur du dispositif de reprise d'effort d'aube suivant une première direction d'engagement alignée avec l'axe radial de bouche en effectuant une translation axiale sur une distance prédéterminée. La translation axiale est autorisée lorsque les évidements portés par l'une des deux surfaces du support d'aube et du dispositif de reprise d'aube sont alignés axialement avec les portées coniques de l'autre surface et peuvent donc coulisser axialement les uns par rapport aux autres. En pratique, le support d'aube est translaté de manière à ce que ses portées coniques soient positionnées au-delà des portées coniques du dispositif en s'éloignant de l'ouverture de bouche afin que, par un simple mouvement de rotation suivant un angle prédéterminé autour de l'axe radial A, les portées coniques du support d'aube se retrouvent dans la même position angulaire que les portées coniques du dispositif. En effectuant ensuite une translation axiale du support d'aube suivant une deuxième direction (de désengagement) opposée à la première direction d'engagement, les portées coniques du support d'aube viennent s'appuyer par coulissement contre les portées coniques du dispositif où elles sont en butée conique, c'est-à-dire à la fois axiale et radiale. Les portées coniques des deux surfaces respectives sont alors en correspondance géométrique les unes avec les autres. Tout mouvement de coulissement axial du support d'aube par rapport au dispositif et tendant à retirer le support d'aube de la bouche de moyeu suivant la deuxième direction dite de désengagement est alors rendu impossible, ce qui verrouille le support d'aube par rapport au dispositif sans avoir besoin d'intervenir à l'intérieur du moyeu. Le déverrouillage et démontage sont effectués dans l'ordre inverse des opérations décrites ci-dessus.

Selon d'autres caractéristiques possibles :
- le dispositif de reprise d'effort d'aube comprend une pièce intermédiaire d'interface qui comporte, sur une surface interne, une première pluralité de portées coniques disposées en alternance avec des évidements de manière circonférentielle et coaxiale à l'axe radial A de la bouche, les portées coniques étant orientées de telle manière que le sommet du cône de chaque portée est dirigé en direction de l'ouverture radiale de la bouche;
- le support d'aube comporte, sur une surface externe, une deuxième pluralité de portées coniques disposées en alternance avec des évidements de manière circonférentielle et coaxiale à l'axe radial A de la bouche, les portées coniques de la deuxième pluralité de portées coniques ayant la même orientation que celle de la première pluralité de portées coniques;
- l'ensemble comporte au moins un organe de calage angulaire sur un premier des deux éléments parmi le support d'aube et le dispositif, ledit au moins un organe de calage angulaire étant destiné à coopérer avec un empochement de calage angulaire aménagé sur le deuxième élément et s'étendant transversalement relativement à l'axe radial A.

L'invention a également pour objet un ensemble à calage variable pour soufflante de turbomachine comprenant:
- un moyeu s'étendant circonférentiellement autour d'un axe longitudinal X-X' de rotation du moyeu et comprenant une pluralité de bouches de moyeu réparties circonférentiellement sur une périphérie externe du moyeu, chaque bouche de moyeu délimitant intérieurement une ouverture orientée radialement relativement à l'axe longitudinal et permettant d'accéder à l'intérieur de la bouche de moyeu,
- pour chaque bouche de moyeu, un module de montage d'une aube de soufflante tel que brièvement exposé ci-dessus.

Selon d'autres caractéristiques possibles :
- l'ensemble comporte un système à excentrique de commande de pivotement du support d'aube qui est configuré pour commander le pivotement du support d'aube autour de l'axe radial de bouche;
- le système à excentrique de commande de pivotement du support d'aube comprend une pièce formant excentrique qui est configurée pour s'engager avec une partie inférieure du support d'aube qui est opposée à une partie supérieure du support d'aube disposée dans une position radiale éloignée de l'axe longitudinal et destinée à recevoir une aube de soufflante;
- la partie inférieure du support d'aube porte des cannelures externes qui sont configurées pour s'engrèner avec des cannelures internes d'une extrémité d'engagement de l'excentrique ;
- l'extrémité d'engagement de l'excentrique présente une forme générale de pot cylindrique ouvert à sa partie supérieure orientée en direction de l'ouverture radiale de bouche et qui est muni, sur sa surface intérieure, des cannelures internes ;
- les cannelures externes de la partie inférieure du support d'aube sont disposées à une distance, prise suivant l'axe radial A, des portées coniques du support d'aube qui est telle que les cannelures externes sont en correspondance géométrique avec les cannelures internes de l'extrémité d'engagement lorsque les portées coniques respectives du support d'aube et du dispositif sont en correspondance géométrique les unes avec les autres ;
- les portées coniques du support d'aube sont disposées entre l'organe ou l'empochement de calage angulaire, selon que l'organe est porté par le support d'aube ou le dispositif, et les cannelures externes ;
- l'extrémité d'engagement de l'excentrique est également configurée pour être couplée mécaniquement de manière amovible avec une partie inférieure de la bouche de moyeu qui est opposée à l'ouverture radiale de cette dernière ;
- l'extrémité d'engagement de l'excentrique comporte un ensemble de double paroi cylindrique concentrique ouvert à sa partie supérieure en direction de l'ouverture radiale de bouche et comprenant, d'une part, une première paroi externe qui est couplée mécaniquement de manière amovible avec la partie inférieure de la bouche et, d'autre part, une deuxième paroi interne qui est munie sur sa face interne des cannelures configurées pour s'engrèner avec les cannelures externes de la partie inférieure du support d'aube ;
- le dispositif de reprise d'effort d'aube est également configuré pour être mis en place dans la bouche de moyeu à travers l'ouverture de cette dernière.

L'invention a également pour objet une soufflante de turbomachine qui comprend un ensemble à calage variable pour soufflante de turbomachine tel que brièvement exposé ci-dessus.

Selon une caractéristique, la soufflante comprend une pluralité d'aubes de soufflante montées chacune sur un support d'aube d'un module de montage d'une bouche de moyeu.

L'invention a aussi pour objet une turbomachine comprenant une soufflante telle que brièvement exposée ci-dessus.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une représentation schématique partielle en perspective d'une soufflante de turbomachine selon l'invention;
[Fig. 2] La figure 2 est une représentation schématique partielle en coupe axiale de la soufflante partiellement représentée à la figure 1 selon un premier mode de réalisation de l'invention;
[Fig. 3] La figure 3 est une représentation schématique partielle agrandie et plus détaillée du module de montage d'aube de soufflante intégré à la bouche de moyeu de la figure 2;
[Fig. 4] La figure 4 représente en perspective un exemple de support d'aube et un exemple de pièce intermédiaire d'interface du dispositif de reprise d'aube utilisés sur les figures 2 et 3 ;
[Fig. 5A] La figure 5A illustre en perspective une étape d'engagement du support d'aube de la figure 4 à l'intérieur de la pièce intermédiaire d'interface de la figure 4 ;
[Fig. 5B] La figure 5B illustre en perspective une position intermédiaire basse de mise en butée axiale du support d'aube à l'intérieur de la pièce intermédiaire d'interface ;
[Fig. 5C] La figure 5C illustre en perspective une étape de mise en rotation du support d'aube de la figure 5B dans la position basse de cette figure ;
[Fig. 5D] La figure 5D représente en vue de côté le support d'aube en position intermédiaire basse après rotation et butée angulaire de la figure 5C;
[Fig. 5E] La figure 5E illustre une étape finale de relèvement du support d'aube pour une mise en butée axiale de ce dernier en position verrouillée à l'intérieur de la pièce intermédiaire d'interface.

### Description détaillée

L'invention s'applique à toute turbomachine équipée d'au moins une soufflante carénée ou non dont les aubes de soufflante (soufflante carénée) ou les pales d'hélice (soufflante non carénée) sont équipées d'un ensemble de changement de calage ou d'orientation, appelé également ensemble à calage variable.

La description détaillée qui suit concerne des modes de réalisation d'une soufflante carénée d'une turbomachine pour un aéronef comprenant un ensemble à calage variable des aubes de la soufflante.

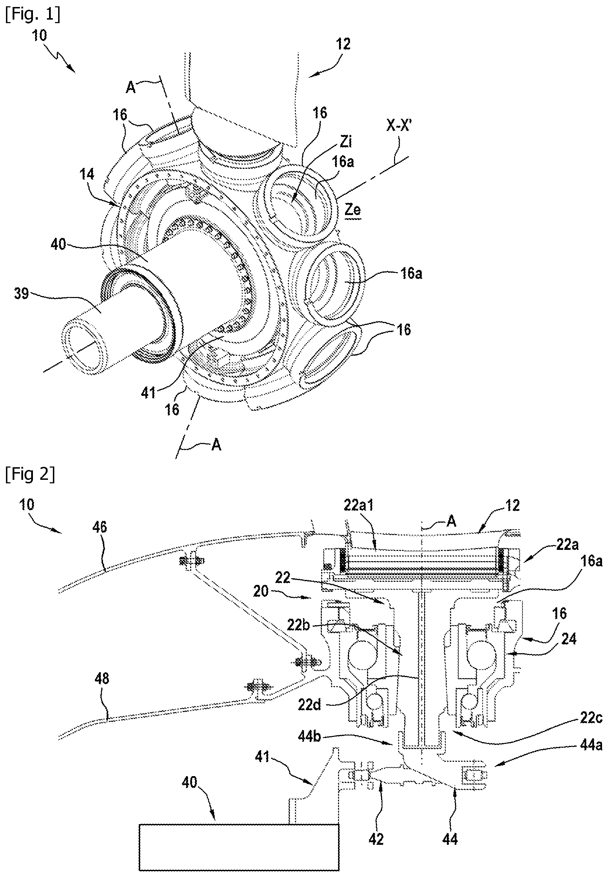

Comme représenté sur la figure 1 et désigné de manière générale par la référence notée 10, une soufflante comprend une pluralité d'aubes dont une seule, notée 12, est partiellement représentée.

La soufflante comprend un moyeu 14 s'étendant circonférentiellement autour d'un axe longitudinal de rotation X-X' du moyeu et comprend une pluralité de bouches de moyeu 16 réparties circonférentiellement sur une périphérie externe du moyeu.

Chaque bouche de moyeu 16 délimite intérieurement une ouverture 16a orientée radialement, suivant un axe A ayant une orientation radiale relativement à l'axe longitudinal X-X'. Les bouches de moyeu 16 sont ainsi toutes orientées à la manière d'une étoile relativement au moyeu, chacune suivant un axe radial A. L'ouverture radiale 16a présente une section de passage qui s'étend perpendiculairement à l'axe radial A et qui est apte à mettre en communication une zone périphérique Ze externe à la bouche de moyeu 16, située en éloignement de l'axe longitudinal X-X', avec une zone périphérique interne Zi de la bouche de moyeu, qui est plus proche de l'axe longitudinal. Autrement dit, la bouche de moyeu 16 présente une ouverture 16a traversante selon l'axe radial.

Comme représenté sur la figure 1, le moyeu 14 comporte dans sa partie interne centrale, du centre vers l'extérieur, un moyen de commande comprenant ici un piston fixe 39 d'un vérin de commande et la chambre mobile 40 de ce dernier, ainsi qu'une pièce de liaison 41 entre ce vérin de commande et des bielles 42 illustrées sur la figure 2 et décrites ci-après.

Comme représenté sur la figure 1, une aube 12 est représentée montée dans une bouche de moyeu 16. Les autres bouches sont vides pour ne pas complexifier le dessin mais une aube est normalement également montée dans chacune d'elles.

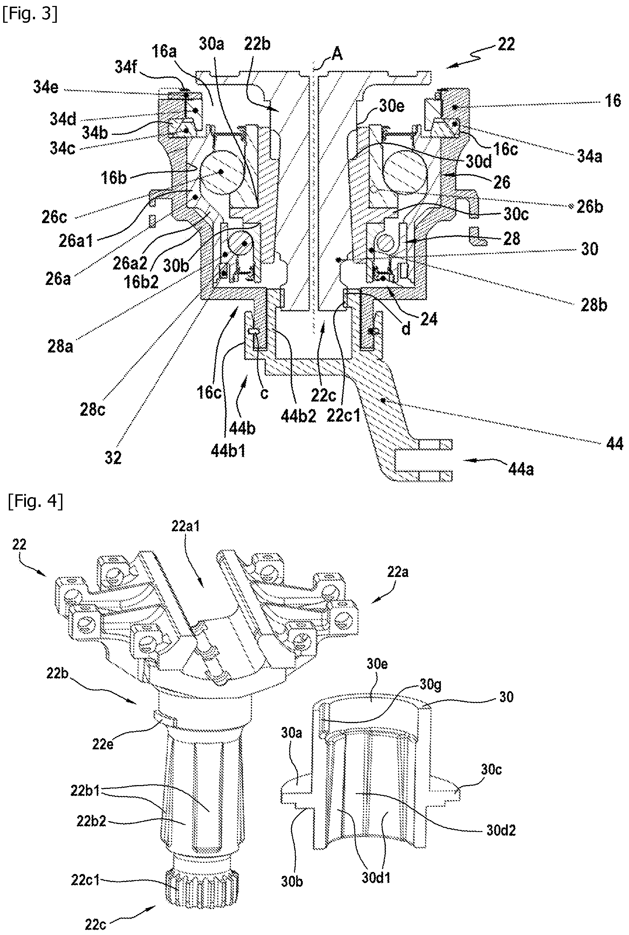

La figure 2 représente, en section axiale suivant l'axe X-X', une partie de la soufflante qui comprend une bouche de moyeu 16 dans laquelle est intégré un module 20 de montage d'une aube de soufflante 12 (le module 20 est représenté de manière plus détaillée à la figure 3). Ce module 20 fait partie d'un ensemble à calage variable des aubes de la soufflante selon un mode de réalisation de l'invention qui comprend le moyeu 14 et d'autres modules 20 pour les autres aubes de la soufflante.

Le module 20 de montage d'aube de soufflante comprend deux composants principaux, à savoir un support d'aube ou pivot 22 et un dispositif de reprise d'effort d'aube 24 qui est en contact avec le support. Dans le mode de réalisation décrit, le module 20 est configuré pour être mis en place dans la bouche de moyeu 16 à travers l'ouverture radiale 16a de cette dernière, depuis une zone périphérique Ze externe à la bouche (figures 1 et 2). Dans le présent mode, ces configurations de module et de bouche de moyeu permettent une mise en place du module depuis l'extérieur du moyeu, ce qui permet de simplifier les opérations de maintenance lorsqu'il s'agit de retirer le module de la bouche (depuis l'extérieur de cette bouche) pour accéder aux constituants internes du module. De même, la remise en place du module inspecté, et éventuellement réparé ou remplacé, s'effectue depuis l'extérieur du moyeu. Il n'est donc plus nécessaire de démonter tout le capotage interne de la soufflante et les mécanismes internes pour la commande de pivotement des aubes. Un temps considérable est ainsi gagné et les coûts de maintenance sont fortement réduits. Les risques d'endommagement des structures environnantes en place dans la soufflante sont également réduits.

Plus particulièrement, le support d'aube 22 assure, d'une part, la rétention de l'aube de soufflante tant que le support est maintenu en position dans le dispositif de reprise d'effort d'aube (par exemple via les segments 36a et 36b comme cela sera décrit plus loin) et, d'autre part, le guidage de celle-ci pour le calage de son pas (orientation angulaire de l'aube relativement à l'axe radial A passant par la bouche de moyeu).

Le support d'aube 22 est destiné à supporter l'aube de soufflante 12 et, à cet effet, il comporte une partie supérieure 22a (figures 2 et 4) dans laquelle est aménagée une alvéole 22a1 qui a pour fonction de recevoir le pied de l'aube (non représenté sur la figure 4) et de maintenir ce dernier en position, par exemple, grâce à un montage du type à queue d'aronde. Comme représenté sur les figures 2 à 4, la partie supérieure 22a forme un plateau qui surmonte ou prolonge un plot ou pied central 22b inférieur de forme générale sensiblement cylindrique.

Le support d'aube 22 est apte à pivoter autour de l'axe radial A de la bouche de moyeu 16 sous l'action d'un mécanisme de commande à excentrique qui sera décrit plus tard et qui interagit avec la partie inférieure proximale 22c du support (partie opposée à la partie supérieure distale 22a et qui se situe à l'extrémité inférieure du plot 22b) disposée à l'intérieur du moyeu et à proximité de l'axe X-X' par opposition à la partie distale 22a.

Comme représenté sur la figure 2, le support d'aube 22 est percé en son centre d'un canal traversant 22d (le canal traverse le plateau et le plot) destiné, par exemple, à permettre le passage de jauges de contraintes ou d'un système de dégivrage de l'aube.

Le dispositif de reprise d'effort d'aube 24 forme, quant à lui, dans cet exemple un bloc unitaire qui est monté d'un seul tenant avant le support d'aube 22, à l'intérieur de la bouche de moyeu 16, en passant par l'ouverture radiale 16a, depuis une zone périphérique Ze externe à la bouche.

Le dispositif de reprise d'effort d'aube 24 est mis en place en étant maintenu serré contre une surface interne 16b de la bouche de moyeu 16, surface qui est disposée dans une position transversale relativement à l'axe radial A (une direction transversale s'étendant perpendiculairement à l'axe radial). La surface interne 16b s'étend sensiblement parallèlement à l'axe A sur une première portion 16b1 à partir de l'ouverture 16a, puis forme une deuxième portion convergente 16b2 (ici à la manière d'un entonnoir avec un col de forme générale tronconique suivi d'une portion terminale sensiblement parallèle à l'axe A) resserrant l'espace interne à la bouche en éloignement de l'ouverture 16a (en direction de l'axe X-X'). Ce rétrecissement forme une butée suivant l'axe radial A pour le module 20, en direction de l'intérieur du moyeu (en direction de l'axe X-X').

Le dispositif 24 comprend dans cet exemple un ensemble formé d'au moins deux paliers à roulements à billes:
- un palier extérieur 26 disposé, relativement à l'axe radial A, dans une position transversale qui est la plus éloignée de cet axe, et
- un palier intérieur 28 disposé dans une position transversale qui est la plus proche de l'axe radial A par rapport à la position transversale externe du palier extérieur 26. On notera que la notion d'extérieur et d'intérieur des paliers se réfère également directement à la position de chacun de ces paliers par rapport à l'axe central longitudinal X-X'.

Le palier extérieur 26 est configuré pour reprendre les efforts radiaux (suivant l'axe radial A) et transversaux (suivant un axe perpendiculaire à l'axe radial A) transmis par l'aube en cours de fonctionnement de la soufflante (rotation autour de l'axe X-X') et est disposé dans une position radiale (suivant l'axe radial A) qui est plus éloignée de l'axe longitudinal X-X' que la position radiale du palier intérieur 28. Le palier intérieur est configuré pour reprendre les efforts transversaux ou tangentiels transmis par l'aube en cours de fonctionnement de la soufflante, tandis que le palier extérieur 26 ( de plus grandes dimensions que le palier intérieur 28) ) est configuré pour reprendre des efforts radiaux suivant l'axe radial A (efforts dûs à la force centrifuge) qui sont les efforts les plus importants auxquels est soumis le dispositif 24 lors de la rotation de l'aube.On notera que les modules 20 sont montés radialement en étoile par rapport au moyeu 14 de telle manière que l'orientation de chaque module dans l'espace varie en fonction de la position angulaire de la bouche de moyeu considérée.

Comme plus particulièrement représenté sur la figure 3, le palier extérieur 26 comporte une bague externe 26a, une bague interne 26b et des roulements à billes 26c enserrés conjointement par les deux bagues.

De même, le palier intérieur 28 comporte une bague externe 28a, une bague interne 28b et des roulements à billes 28c enserrés conjointement par les deux bagues.

La bague externe 26a du palier extérieur 26 est disposée dans une position transversale externe qui est plus éloignée de l'axe radial A de bouche que la position transversale des roulements 26c et 28c des paliers extérieur 26 et intérieur 28. La bague externe 26a s'étend sensiblement parallèlement à l'axe radial A le long des roulements 26c du palier extérieur et en descendant le long de la bague externe 28a du palier intérieur 28, et prend appui contre cette bague externe 28a. On notera que la bague externe 26a s'étend vers le bas (en direction du palier intérieur) en suivant le profil de la surface interne 16b de la bouche avec laquelle elle est en contact, c'est-à-dire en adoptant d'abord une portion sensiblement rectiligne 26a1, puis en se resserrant de manière à adopter une portion convergente 26a2 (col formant une portion tronconique suivie d'une portion rectiligne). Un élément de serrage 32 du palier intérieur 28 peut être disposé dans une position transversale externe relativement au palier intérieur 28 et la partie inférieure resserrée de la bague externe 26a du palier extérieur 26 prend appui sur cet élément de serrage. Cet élément de serrage assure une précharge ou pré-contrainte du palier intérieur 28.

Cet élément de serrage 32 est par exemple un écrou de serrage vissé sur l'intérieur de la bague externe 26a du palier externe 26. Par exemple, une clé 34e et un circlips 34f permettent d'assurer le non-desserrage de l'élément de serrage 32, comme décrit plus loin, bien que d'autres organes assurant un non-desserrage de l'élément 32 puissent être alternativement envisagés.

Le dispositif 24 comprend également une pièce intermédiaire d'interface 30 disposée entre, d'une part, les paliers extérieur 26 et intérieur 28 et, d'autre part, le support d'aube 22. La pièce 30 fait partie du bloc 24 ou d'un bloc équivalent équipé de paliers configurés différemment et sert d'interface mécanique avec le support 22. Une telle interface permet d'éviter d'user les bagues des roulements si elles étaient directement en contact avec le support d'aube 22. La pièce 30 sera décrite plus en détail ultérieurement conjointement avec le support d'aube lors de la description de la mise en place et du verrouillage du support d'aube à l'intérieur du dispositif de reprise d'effort 24, et notamment de la pièce d'interface 30. Dans le dispositif 24 décrit ci-dessus le palier intérieur 28 est logé dans la bague externe du palier extérieur 26, ainsi que la pièce intermédiaire d'interface 30 qui permet de lier les bagues intérieures et de fournir un support au support d'aube 22, permettant ainsi de former une "cartouche" contenant les paliers à roulements et pouvant être manipulé en un seul bloc unitaire (d'un seul tenant) par un opérateur désirant installer le dispositif dans une bouche de moyeu (depuis l'extérieur du moyeu) ou l'en retirer (toujours par l'extérieur).

La bague interne 26b, 28b de chacun des paliers extérieur et intérieur est disposée dans une position transversale interne relativement à la position transversale externe des roulements 26c, 28c de chaque palier qui est plus éloignée de l'axe radial A. Chaque bague interne est logée dans un aménagement 30a, 30b prévu sur une surface radialement externe de la pièce intermédiaire d'interface 30. Plus particulièrement, la pièce 30 comporte, sur sa surface externe orientée en direction des roulements, une collerette périphérique externe 30c qui délimite au-dessus et en-dessous d'elle un espace supérieur et un espace inférieur pour recevoir respectivement les bagues internes 26b et 28b. La pièce d'interface 30 est percée dans sa partie centrale pour recevoir axialement (suivant l'axe radial A) le support d'aube 22 et pour coopérer avec ce dernier comme cela sera décrit plus loin par l'intermédiaire de portées coniques sur la surface interne de la pièce 30. Un épaulement interne 30d est par exemple aménagé à la partie supérieure de la pièce 30 afin de former une butée axiale pour le support 22 qui comporte sur sa surface externe un épaulement externe de diamètre adapté complémentaire.

Le dispositif de reprise d'effort d'aube 24 peut comprendre également un système 34 de maintien en position et de serrage par effet de coin de l'ensemble des paliers à roulements 26, 28 à l'intérieur de la bouche de moyeu 16.

Ce système 34 est par exemple positionné sensiblement au niveau de l'ouverture de bouche 16a (après mise en place du dispositif 24 dans la bouche), dans une position radiale (suivant l'axe radial A) qui est plus éloignée de l'axe longitudinal X-X' que le palier extérieur 26. Sur la figure 3, le système 34 est disposé au-dessus du palier 26.

Le système 34 de maintien en position et de serrage par effet de coin est, par exemple, un système du type à clef de voûte qui serre la cartouche de paliers de roulements contre la surface interne 16b de la bouche. Un tel système 34 comprend, par exemple, deux segments en deux demi-coquilles 34a-b, des pièces de serrage 34c (réparties circonférentiellement et intérieurement aux segments), un écrou de serrage 34d, ainsi qu'une clé anti-rotation 34e et un circlips 34f. Les segments 34a-b et les pièces de serrage 34c assurent le maintien en position radiale (suivant l'axe radial A) de la cartouche de paliers et son serrage contre la surface interne 16b de la bouche de moyeu (suivant une direction transversale par rapport à l'axe A et en éloignement de celui-ci). Les segments 34a-b et la partie externe des pièces de serrage 34c avec laquelle les segments coopèrent sont notamment logés dans une gorge annulaire 16c aménagée dans l'épaisseur de la paroi de la bouche de moyeu. L'écrou de serrage 34d, la clé anti-rotation 34e et le circlips 34f assurent le maintien en position radiale des segments 34a-b et pièces de serrage 34c. Plus particulièrement, les deux segments 34a-b et les pièces de serrage 34c ont des portées coniques respectives en regard (les portions de surfaces coniques internes pour les segments et les portions de surfaces coniques externes en regard pour les pièces de serrage sont orientées chacune sur un cône dont le sommet est positionné sur l'axe A en éloignement de l'axe central X-X', c'est-à- dire que le cône est ouvert en direction de l'axe central X-X') qui sont maintenues en appui l'une contre l'autre grâce à l'effort de serrage induit par l'écrou 34d sur les pièces de serrage 34c (l'écrou présente une portion de surface conique interne qui s'appuie sur chacune des portions de surfaces coniques internes des pièces de serrage, les portions de surfaces coniques étant orientées chacune sur un cône dont le sommet est positionné sur l'axe A en direction de l'axe central X-X', c'est-à- dire que le cône est ouvert en éloignement de l'axe central X-X'). On notera que d'autres types de montages permettent d'assurer la même fonction.

Comme représenté sur la figure 4, le support ou pivot d'aube 22 et la pièce d'interface 30 présentent des configurations complémentaires qui leur permettent de coopérer mécaniquement entre elles et de monter/verrouiller et démonter/déverrouiller le support d'aube par rapport à la pièce d'interface à partir de l'extérieur de la bouche de moyeu où il s'intègre.

Plus particulièrement, le support d'aube 22 et la pièce d'interface 30 sont mutuellement configurés pour assurer, d'une part, un serrage du support d'aube contre la pièce d'interface 30 et, d'autre part, une retenue axiale suivant l'axe radial A du support d'aube à l'intérieur de la pièce d'interface 30 afin d'empêcher tout mouvement de désengagement axial du support d'aube par rapport à la pièce d'interface 30 et tendant à le retirer de la bouche de moyeu.

Le support d'aube 22 et la pièce d'interface 30 comportent ainsi chacun, sur leurs surfaces respectives destinées à coopérer l'une avec l'autre, une alternance de portées coniques et d'évidements permettant alternativement, d'une part, lorsque les évidements d'une des deux surfaces respectives sont en correspondance géométrique avec les portées coniques de l'autre surface, de faire coulisser axialement le support d'aube par rapport à la pièce d'interface 30 et, d'autre part, lorsque les portées coniques des deux surfaces respectives sont en correspondance géométrique les unes avec les autres, d'empêcher tout mouvement de coulissement axial du support d'aube par rapport au dispositif et tendant à retirer le support d'aube de la bouche de moyeu.

Comme représenté sur la figure 4, la pièce intermédiaire d'interface 30 dont seule une moitié (vue de l'intérieur) obtenue suivant une coupe axiale est représentée comporte, sur une surface interne, une première pluralité de portées coniques 30d1 disposées en alternance avec des évidements 30d2 suivant une circonférence centrée autour de l'axe central de la pièce 30 et également autour de l'axe radial A de la bouche de moyeu (non représenté sur la figure 4). Les portées coniques et les évidements sont sensiblement parallèles entre eux et à l'axe central de la pièce 30 ainsi qu'à l'axe radial A. Les portées coniques 30d1 sont orientées de telle manière que le sommet du cône de chaque portée est dirigé en direction de l'ouverture supérieure 30e de la pièce d'interface 30, ouverture qui est orientée vers l'ouverture radiale 16a de la bouche. Chaque portée conique forme en quelque sorte une rampe ou pente inclinée du bas vers le haut en direction de l'axe central de la pièce 30.

La pièce d'interface 30 présente ici en outre, à proximité de son ouverture supérieure 30e, un épaulement interne 30f formant un retrait en direction transversale relativement à l'axe radial A (voir figure 3) par rapport aux portées coniques et évidements. Un empochement de calage angulaire 30g est pratiqué dans la surface annulaire en retrait de la pièce d'interface 30.

A titre d'exemple, la pièce d'interface comporte quatres portées coniques 30d1 et quatre évidements 30d2 bien qu'un nombre différent puisse être envisagé.

Le support d'aube 22 comporte, quant à lui, sur une surface externe du plot central 22b, une deuxième pluralité de portées coniques 22b1 disposées en alternance avec des évidements 22b2 suivant une circonférence centrée autour de l'axe central du support 22 et également autour de l'axe radial A de la bouche de moyeu (non représenté sur la figure 4). Cette configuration procure au plot/pied du support 22 une forme de crabot conique.

Les portées coniques et les évidements sont sensiblement parallèles entre eux et à l'axe central du support 22 ainsi qu'à l'axe radial A.

Les portées coniques 22b1 ont la même orientation que celle des portées coniques 30d1, à savoir que le sommet du cône de chaque portée est dirigé en direction de la partie supérieure 22a du support. Chaque portée conique forme en quelque sorte une rampe ou pente inclinée en partant du haut et en se dirgeant vers le bas en s'écartant de l'axe central du support. Les nombres des portées coniques et des évidements du support correspondent à ceux de la pièce d'interface.

Par ailleurs le support 22 comporte un organe de calage angulaire 22e qui est destiné à coopérer avec l'empochement de calage angulaire 30g de la pièce d'interface 30. Cet organe 22e s'étend transversalement relativement à l'axe radial A et à l'axe central du support de manière à former un élément saillant extérieurement à la surface externe du plot du support.

La partie inférieure 22c du support d'aube porte en outre, notamment à sa portion terminale, des cannelures externes 22c1 orientées parallèlement à l'axe du support et à sa dimension allongée.

Comme représenté sur la figure 4, les portées coniques 22b1 du support d'aube sont disposées entre l'organe de calage angulaire 22e et les cannelures externes 22c1.

Comme plus particulièrement représenté sur la figure 2, un système ou mécanisme à excentrique de commande de pivotement du support d'aube 22 est prévu à l'intérieur du moyeu 14, sous la bouche 16 (par exemple à proximité de l'axe X-X') et est configuré pour commander le pivotement du support d'aube 22 autour de l'axe radial A de bouche et donc son orientation angulaire.

Plus particulièrement, le système à excentrique de commande de pivotement du support d'aube comprend une pièce formant excentrique qui est configurée pour s'engager avec la partie inférieure saillante 22c du support d'aube afin de faire pivoter ce dernier et donc l'aube qu'il supporte, sur commande, suivant l'angle de pivotement souhaité par rapport à la phase de vol considérée.

Le système de commande de pivotement comprend par exemple le vérin axial de commande centré sur l'axe longitudinal X-X' et décrit en référence à la figure 1. Ce vérin comprend la tige axiale 39 fixe par rapport aux structures du turboréacteur (fig.1) et le corps ou chambre mobile 40. Le système de commande de pivotement comprend également la pièce de liaison 41 sur laquelle plusieurs bielles axiales 42 sont raccordées par une de leurs deux extrémités opposées (une bielle par support d'aube et par bouche et qui est disposée dans une position radiale interne par rapport à la bouche). L'autre extrémité de chaque bielle est raccordée à une extrémité 44a de la pièce formant excentrique 44 mentionnée ci-dessus, ici en forme générale de coude, et dont l'extrémité opposée 44b forme une extrémité d'engagement ou d'accostage. Le déplacement axial du corps mobile 40 entraine la pièce de liaison 41 en translation, et donc la translation axiale des bielles 42, ce qui fait pivoter la pièce 44 et modifie ainsi de façon correspondante l'orientation angulaire du support d'aube et donc de l'aube.

L'extrémité d'engagement 44b de l'excentrique 44 est configurée pour être couplée mécaniquement de manière amovible avec une partie inférieure 16c de la bouche de moyeu qui s'étend sous le dispositif de reprise d'effort d'aube 24, en plus du couplage mécanique entre l'extrémité d'engagement 44b et les cannelures externes 22c1 du support d'aube 22. La partie inférieure 16c s'étend, par exemple, à partir de la portion inférieure resserrée 16b2 en refermant l'espace situé en-dessous le dispositif 24 en direction de l'axe radial A.

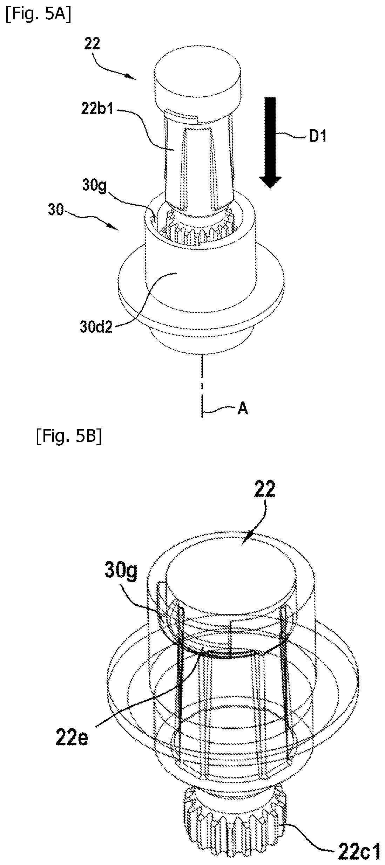

Plus particulièrement, l'extrémité d'engagement 44b de l'excentrique est configurée de manière à comporter un ensemble de double paroi cylindrique concentrique ouvert à sa partie supérieure en direction de l'ouverture radiale de bouche 16a. Cet ensemble comprend, d'une part, une première paroi externe 44b1, sensiblement cylindrique, qui est couplée mécaniquement de manière amovible, par exemple avec un circlips c, avec la partie inférieure 16c de la bouche (ici la partie 16c se termine par une jupe verticale et la paroi externe 44b1 est agencée coaxialement autour de la jupe) et, d'autre part, une deuxième paroi interne 44b2, sensiblement cylindrique, qui est munie sur sa face interne de cannelures internes d configurées pour s'engrèner avec les cannelures externes 22c1 de la partie inférieure du support d'aube. D'autres configurations d'excentrique dotées de cannelures internes peuvent alternativement être envisagées. Dans la configuration décrite (ou dans des configurations alternatives non représentées), l'excentrique 44 est ainsi placé en attente (lors du montage du support d'aube) sur la bouche de moyeu avant de pouvoir être engagé mécaniquement, ici par engrènement (via les cannelures 22c1), avec le support d'aube 22, comme expliqué ci-après en référence aux figures 5A-E. On notera que le montage de l'excentrique en attente du support d'aube est optionel et l'engrènement des cannelures de l'excentrique avec les cannelures du support d'aube peut être réalisé différemment.

Par ailleurs, la soufflante comporte de manière connue, dans sa partie amont (à gauche sur la figure 2), un cône aérodynamique 46 ("spinner" en terminologie anglo-saxonne) formant un capot enveloppant notamment les modules de montage des aubes de soufflante et le mécanisme de commande de pivotement des supports d'aube. La soufflante comporte également, intérieurement au cône 46, un capot interne de drainage 48. De manière connue, les aubes de la soufflante s'étendent radialement au-delà du cône 46 afin d'être exposées à la veine d'air d'écoulement entourant le cône.

Lors de la mise en place du module de montage d'aube 20 dans la bouche de moyeu 16, le dispositif 24 (cartouche de paliers à roulements) est préalablement introduit par l'ouverture radiale 16a dans la bouche de moyeu 16 de manière à être positionné en appui contre la surface interne 16b de la bouche. Le système 34 décrit ci-dessus est mis en place par l'extérieur, élément constitutif par élément constitutif, en commençant par les segments 34a-b qui s'insèrent dans une gorge annulaire 16c interne à la bouche (fig. 3), par exemple à proximité de son ouverture 16a, les pièces de serrage 34c qui viennent intérieurement en appui suivant une portée conique contre les faces internes coniques des segments, puis l'écrou de serrage 34d, la clé anti-rotation 34e et le circlips 34f. Le dispositif 24 est ainsi serré contre la surface interne 16b de la bouche, suivant une direction transversale perpendiculaire à l'axe A.

Les figures 5A à 5E illustrent le synoptique de montage du support d'aube 22 dans la pièce d'interface 30 tels qu'ils ont été décrits en référence à la figure 4. Par souci de simplicité, la partie supérieure du support d'aube 22 a été retirée.

La figure 5A montre la phase d'engagement axial (suivant l'axe radial A de la bouche) du support 22 suivant une première direction d'engagement F1 (ici direction verticale descendante) à l'intérieur de la pièce d'interface 30 qui est représentée en transparence par souci de clarté du mécanisme de verrouillage. Le support 22 est introduit axialement dans le logement interne central de la pièce 30 en orientant angulairement le support 22 de manière à ce que les portées coniques 22b1 de ce dernier soient en vis-à-vis (suivant l'axe radial A) des évidements 30d2 de la pièce d'interface 30 afin de pouvoir faire coulisser axialement le support le long de cette dernière. Lors de ce mouvement de descente du support 22, les cannelures 22c1 passent au travers des cannelures d de l'excentrique (notamment de la deuxième paroi 44b2 de ce dernier).

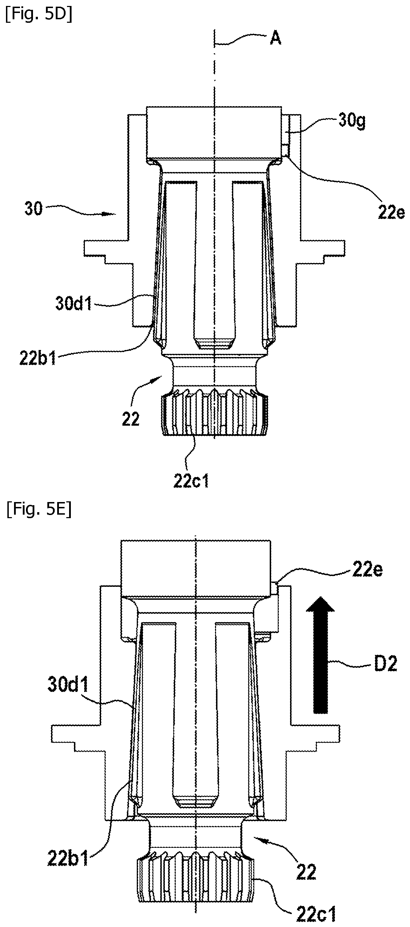

La figure 5B illustre la position atteinte par le support 22 en fin d'engagement axial. L'organe de calage angulaire 22e sert à orienter le support d'aube lors de la descente dans la pièce d'interface 30. La position de la figure 5B est atteinte par suite de la mise en butée axiale de l'organe de calage angulaire 22e du support dans l'empochement 30g de la pièce contre une des parois latérales opposées de l'empochement. Dans cette position intermédiaire (figure 5B) les portées coniques 22b1 du support sont positionnées plus bas que dans la position finale souhaitée de la figure 5E afin de laisser un jeu transversal (perpendiculaire à l'axe radial A) entre les portées coniques respectives du support et de la pièce d'interface. Les cannelures 22c1 sont également amenées à une position axiale ou radiale suivant l'axe radial A qui est inférieure à la position axiale ou radiale des cannelures d de l'excentrique, empêchant ainsi tout engrènement entre les éléments d'engrènement respectifs.

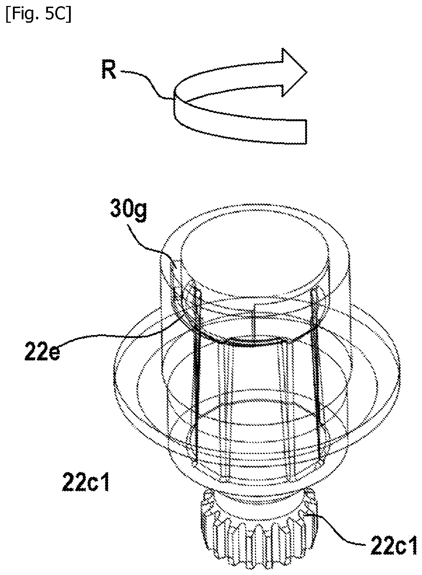

Grâce au jeu transversal précité, il est possible de faire pivoter le support d'aube 22 à l'intérieur de la pièce 30, comme indiqué à la figure 5C par la flèche notée R, afin d'amener l'organe de calage angulaire 22e en butée angulaire contre la paroi latérale opposée de l'empochement 30g. A titre d'exemple, l'empochement 30g s'étend suivant un secteur angulaire d'environ 90°, tandis que l'organe de calage s'étend sur 45°. Les dimensions de cet empochement, de l'organe de calage, ainsi que les nombres de portées coniques et d'évidements des surfaces en regard sont définies pour que la rotation du support d'aube suivant l'excursion angulaire de l'empochement 30g amène les portées coniques 22b1 du support d'aube en regard des portées coniques 30d2 de la pièce d'interface (correspondance géométrique angulaire), grâce au jeu transversal relatif entre elles.

La figure 5D illustre la position atteinte par le support d'aube 22 à la fin du mouvement de pivotement décrit en relation à la figure 5C. A partir de la position de la figure 5D, le support d'aube 22 est entrainé en translation axiale suivant une deuxième direction D2 (désengagement) opposée à la première D1, avec une force suffisante, afin d'amener les portées coniques 22b1 du support d'aube en contact avec les portées coniques 30d2 de la pièce d'interface par coulissement sur leurs pentes respectives, jusqu'à atteindre la position de la figure 5E où les portées coniques respectives sont en butée axiale par adhérence les unes contre les autres, deux à deux (les portées coniques s'autoverrouillent les unes contre les autres) pendant que les cannelures 22c1 du support d'aube et les cannelures d de l'excentrique s'alignent et s'engrènent mutuellement.Le support d'aube est ainsi verrouillé en position axiale et serré contre la pièce d'interface 30. Il ne peut plus continuer sa remontée axiale suivant la direction D2 et sortir de la bouche de moyeu.

Le déverrouillage et le démontage du support d'aube peuvent être effectués simplement en effectuant les opérations dans l'ordre inverse.

On notera que les opérations de montage et verrouillage du support d'aube dans la pièce d'interface (dispositif de reprise d'aube) sont simplifiées par rapport à l'art antérieur dans la mesure où elles sont effectuées par l'extérieur de la bouche de moyeu et non plus depuis l'intérieur de cette dernière. De plus, l'utilisation de petites pièces au montage, comme dans l'art antérieur, est évitée, ce qui simplifie là encore les opérations.

L'extrémité d'engagement 44b dentée de l'excentrique est ensuite engagée avec les cannelures externes 22c1 du support d'aube afin de réaliser la liaison avec le mécanisme de pivotement du support d'aube. Cette opération est effectuée à partir de l'intérieur du moyeu mais ne nécessite pas d'utiliser de petites pièces et des pièces en plusieurs parties telles que des segments en demi-coquilles à insérer dans des gorges annulaires. Une telle opération s'avérant délicate à réaliser lorsque l'encombrement est réduit, ce qui est souvent le cas à l'intérieur du moyeu de soufflante.

Bien que la présente description se réfère à des exemples de réalisation spécifiques, des modifications peuvent être apportées à ces exemples sans sortir de la portée générale de l'invention telle que définie par les revendications. En outre, des caractéristiques individuelles des différents modes de réalisation illustrés ou mentionnés peuvent être combinées dans des modes de réalisation additionnels. Par conséquent, la description et les dessins doivent être considérés dans un sens illustratif plutôt que restrictif.

## Revendications

1. Module de montage d'une aube de soufflante de turbomachine comprenant:
- un dispositif de reprise d'effort d'aube (24),
- un support d'aube (22) destiné à supporter une aube de soufflante (12) et apte à pivoter autour d'un axe radial (A), le support d'aube étant configuré pour être engagé axialement suivant l'axe radial (A) à l'intérieur du dispositif de reprise d'effort d'aube (24), le support d'aube (22) et le dispositif de reprise d'effort d'aube (24) étant mutuellement configurés pour assurer, d'une part, un serrage du support d'aube contre le dispositif et, d'autre part, une retenue axiale suivant l'axe radial (A) du support d'aube à l'intérieur du dispositif afin d'empêcher tout mouvement de désengagement axial du support d'aube par rapport au dispositif, le support d'aube et le dispositif comportant chacun, sur leurs surfaces respectives destinées à coopérer l'une avec l'autre, une alternance de portées coniques (22b1, 30d1) et d'évidements (22b2, 30d2) permettant alternativement, d'une part, lorsque les évidements d'une des deux surfaces respectives sont en correspondance géométrique avec les portées coniques de l'autre surface, de faire coulisser axialement le support d'aube (22) par rapport au dispositif (24) et, d'autre part, lorsque les portées coniques des deux surfaces respectives sont en correspondance géométrique les unes avec les autres, d'empêcher tout mouvement de coulissement axial du support d'aube par rapport au dispositif.

2. Module de montage selon la revendication 1, **caractérisé en ce que** le dispositif de reprise d'effort d'aube (24) comprend une pièce intermédiaire d'interface (30) qui comporte, sur une surface interne, une première pluralité de portées coniques (30d1) disposées en alternance avec des évidements (30d2) de manière circonférentielle et coaxiale à l'axe radial (A) du support d'aube (22), les portées coniques (30d1) étant orientées de telle manière que le sommet du cône de chaque portée est dirigé en direction d'une ouverture radiale (16a) du support d'aube (22).

3. Module de montage selon la revendication 2, **caractérisé en ce que** le support d'aube (22) comporte, sur une surface externe, une deuxième pluralité de portées coniques (22b1) disposées en alternance avec des évidements (22b2) de manière circonférentielle et coaxiale à l'axe radial (A) du support d'aube (22), les portées coniques (22b1) de la deuxième pluralité de portées coniques ayant la même orientation que celle de la première pluralité de portées coniques (30d1).

4. Module de montage selon l'une des revendications précédentes, **caractérisé en ce qu'**il comporte au moins un organe de calage angulaire (22e) sur un premier des deux éléments parmi le support d'aube (22) et le dispositif (24), ledit au moins un organe de calage angulaire étant destiné à coopérer avec un empochement de calage angulaire (30g) aménagé sur le deuxième élément et s'étendant transversalement relativement à l'axe radial (A).

5. Ensemble à calage variable pour soufflante de turbomachine, comprenant:
- un moyeu (14) s'étendant circonférentiellement autour d'un axe longitudinal (X-X') de rotation du moyeu et comprenant une pluralité de bouches de moyeu (16) réparties circonférentiellement sur une périphérie externe du moyeu, chaque bouche de moyeu (16) délimitant intérieurement une ouverture (16a) orientée radialement relativement à l'axe longitudinal et permettant d'accéder à l'intérieur de la bouche de moyeu,
- pour chaque bouche de moyeu (16), un module (20) de montage d'une aube de soufflante conforme à l'une des revendications précédentes.

6. Ensemble selon la revendication précédente, **caractérisé en ce qu'**il comporte un système (44) à excentrique de commande de pivotement du support d'aube (22) qui est configuré pour commander le pivotement du support d'aube (22) autour de l'axe radial (A) de bouche de moyeu (16).

7. Ensemble selon la revendication précédente, **caractérisé en ce que** le système (44) à excentrique de commande de pivotement du support d'aube comprend une pièce formant excentrique (44) qui est configurée pour s'engager avec une partie inférieure (22c) du support d'aube qui est opposée à une partie supérieure (22a) du support d'aube disposée dans une position radiale éloignée de l'axe longitudinal (X-X') et destinée à recevoir une aube de soufflante.

8. 3Ensemble selon la revendication précédente, **caractérisé en ce que** la partie inférieure (22c) du support d'aube porte des cannelures externes (22c1) qui sont configurées pour s'engrèner avec des cannelures internes d'une extrémité d'engagement (44b; 44b') de l'excentrique.

9. Ensemble selon la revendication précédente, **caractérisé en ce que** l'extrémité d'engagement (44b) de l'excentrique présente une forme générale de pot cylindrique ouvert à sa partie supérieure orientée en direction de l'ouverture radiale de bouche et qui est muni, sur sa surface intérieure, des cannelures internes.

10. Ensemble selon la revendication 8 ou 9, **caractérisé en ce que** les cannelures externes (22c1) de la partie inférieure du support d'aube sont disposées à une distance, prise suivant l'axe radial (A), des portées coniques (22b1) du support d'aube qui est telle que les cannelures externes sont en correspondance géométrique avec les cannelures internes de l'extrémité d'engagement (44b) lorsque les portées coniquesrespectives du support d'aube (22b1) et du dispositif (30d1) sont en correspondance géométrique les unes avec les autres.

11. Ensemble selon la revendication 5, prise selon la revendication 4, et selon l'une des revendications 8 à 10, **caractérisé en ce que** les portées coniques (22b1) du support d'aube sont disposées entre l'organe (22e) ou l'empochement de calage angulaire (30g), selon que l'organe est porté par le support d'aube ou le dispositif, et les cannelures externes (22c1).

12. Ensemble selon l'une des revendications 8 à 11, **caractérisé en ce que** l'extrémité d'engagement (44b') de l'excentrique (44') est également configurée pour être couplée mécaniquement de manière amovible avec une partie inférieure (16c') de la bouche de moyeu qui est opposée à l'ouverture radiale de cette dernière.

13. Ensemble selon la revendication précédente, **caractérisé en ce que** l'extrémité d'engagement (44b') de l'excentrique comporte un ensemble de double paroi cylindrique concentrique ouvert à sa partie supérieure en direction de l'ouverture radiale de bouche et comprenant, d'une part, une première paroi externe (44b1') qui est couplée mécaniquement de manière amovible avec la partie inférieure (16c') de la bouche et, d'autre part, une deuxième paroi interne (44b2') qui est munie sur sa face interne des cannelures (d) configurées pour s'engrèner avec les cannelures externes (22c1') de la partie inférieure du support d'aube.

14. Soufflante de turbomachine (10), **caractérisé en ce qu'**elle comprend un ensemble à calage variable pour soufflante de turbomachine selon l'une des revendications 5 à 13.

15. Soufflante de turbomachine selon la revendication précédente, **caractérisée en ce que** la soufflante comprend une pluralité d'aubes (12) de soufflante montées chacune sur un support d'aube (22) d'un module de montage (20) d'une bouche de moyeu (16).

16. Turbomachine comprenant une soufflante selon la revendication 14 ou 15.

## Patentansprüche

1. Modul zur Montage einer Bläserschaufel einer Turbomaschine, umfassend:
- eine Vorrichtung zur Schaufelkraftaufnahme (24),
- einen Schaufelträger (22), der ausgelegt ist, um eine Bläserschaufel (12) zu tragen und dazu geeignet ist, eine radiale Achse (A) zu schwenken, wobei der Schaufelträger konfiguriert ist, um axial gemäß der radialen Achse (A) im Inneren der Vorrichtung zur Schaufelkraftaufnahme (24) eingegriffen zu sein, wobei der Schaufelträger (22) und die Vorrichtung zur Schaufelkraftaufnahme (24) gegenseitig konfiguriert sind, um einerseits ein Festschrauben des Schaufelträgers gegen die Vorrichtung und, andererseits, eine axiale Fixierung gemäß der radialen Achse (A) des Schaufelträgers im Inneren der Vorrichtung sicherzustellen, um jede Bewegung der axialen Abkoppelung des Schaufelträgers mit Bezug auf die Vorrichtung zu verhindern, wobei der Schaufelträger und die Vorrichtung jeweils auf ihren entsprechenden Oberflächen, die ausgelegt sind, um miteinander zusammenzuarbeiten, abwechselnd konische Bereiche (22b1, 30d1) und Aussparungen (22b2, 30d2) umfassen, die alternativ ermöglichen, einerseits, wenn die Aussparungen einer der zwei entsprechenden Flächen geometrisch mit den konischen Bereichen der anderen Oberfläche übereinstimmen, den Schaufelträger (22) mit Bezug auf die Vorrichtung (24) axial gleiten zu lassen und andererseits, wenn die konischen Bereiche der zwei entsprechenden Oberflächen geometrisch miteinander übereinstimmen, jede axiale Gleitbewegung des Schaufelträgers mit Bezug auf die Vorrichtung zu verhindern.

2. Modul zur Montage nach Anspruch 1, **dadurch gekennzeichnet, dass** die Vorrichtung zur Schaufelkraftaufnahme (24) ein Schnittstellen-Zwischenstück (30) umfasst, das auf einer inneren Seite eine erste Vielzahl von konischen Bereichen (30d1) umfasst, die abwechselnd mit Vorsprüngen (30d2) umfangmäßig und koaxial zur radialen Achse (A) des Schaufelträgers (22) angeordnet sind, wobei die konischen Bereiche (30d1) derart ausgerichtet sind, dass die Spitze des Kegels jedes Bereichs in Richtung auf eine radiale Öffnung (16a) des Schaufelträger (22) gerichtet ist.

3. Modul zur Montage nach Anspruch 2, **dadurch gekennzeichnet, dass** der Schaufelträger (22) auf einer äußeren Oberfläche eine zweite Vielzahl von konischen Bereichen (22b1) enthält, die abwechselnd mit Aussparungen (22b2) umfangmäßig und conaxial zu der radialen Achse (A) des Schaufelträgers (22) angeordnet sind, wobei die konischen Bereiche (22b1) der zweiten Vielzahl von konischen Bereichen die gleiche Ausrichtung wie diejenige der ersten Vielzahl von konischen Bereichen (30d1) aufweist.

4. Modul zur Montage nach einem der vorhergehenden Ansprüche, **dadurch gekennzeichnet, dass** es mindestens ein Organ zum winkligen Einstellen (22e) auf einem ersten der zwei Elemente unter dem Schaufelträger (22) und der Vorrichtung (24) enthält, wobei das mindestens eine Organ zum winkligen Einstellen ausgelegt ist, um mit einer Einbuchtung zum winkligen Einstellen (30g) zusammenzuarbeiten, die auf dem zweiten Element angebracht ist und sich quer mit Bezug auf die radiale Achse (A) erstreckt.

5. Einheit zum variablen Einstellen für ein Gebläse einer Turbomaschine, umfassend:
- eine Nabe (14), die sich umfangmäßig um eine Längsachse (X-X') der Drehung der Nabe erstreckt und eine Vielzahl von Nabenmündungen (16) umfasst, die umfangmäßig auf einer äußeren Peripherie der Nabe verteilt sind, wobei jede Nabenmündung (16) im Inneren eine Öffnung (16a) begrenzt, die radial mit Bezug auf die Längsachse ausgerichtet ist und ermöglicht, auf das Innere der Nabenmündung zuzugreifen,
- bei jeder Nabenmündung (16) ein Montagemodul (20) einer Bläserschaufel nach einem der vorhergehenden Ansprüche.

6. Einheit nach dem vorhergehenden Anspruch, **dadurch gekennzeichnet, dass** sie ein System (44) mit Exzenter zur Steuerung des Schwenkens des Schaufelträgers (22) enthält, das konfiguriert ist, um das Schwenken des Schaufelträgers (22) um die radiale Achse (A) der Nabenmündung (16) zu steuern.

7. Einheit nach dem vorhergehenden Anspruch, **dadurch gekennzeichnet, dass** das System (44) mit Exzenter zur Steuerung des Schwenkens des Schaufelträgers ein Stück umfasst, das einen Exzenter (44) bildet, das konfiguriert ist, um mit einem unteren Teil (22c) des Schaufelträgers einzugreifen, der einem oberen Teil (22a) des Schaufelträgers gegenüberliegt, der in einer radialen Position entfernt von der Längsachse (X-X') angeordnet und ausgelegt ist, um eine Bläserschaufel aufzunehmen.

8. Einheit nach dem vorhergehenden Anspruch, **dadurch gekennzeichnet, dass** der untere Teil (22c) des Schaufelträgers äußere Rillen (22c1) trägt, die konfiguriert sind, um sich mit den inneren Rillen eines Eingriffsendes (44b, 44b') des Exzenters zu verzahnen.

9. Einheit nach dem vorhergehenden Anspruch, **dadurch gekennzeichnet, dass** das Eingriffsende (44b) des Exzenters im Allgemeinen die Form eines zylindrischen Topfes aufweist, der an seinem oberen Teil, der in Richtung der radialen Öffnung der Mündung ausgerichtet ist, offen ist, und der auf seiner inneren Fläche mit inneren Rillen ausgestattet ist.

10. Einheit nach Anspruch 8 oder 9, **dadurch gekennzeichnet, dass** die äußeren Rillen (22c1) des unteren Teils des Schaufelträgers in einem Abstand, gemessen gemäß der radialen Achse (A), von den konischen Bereichen (22b1) des Schaufelträgers angeordnet sind, der derart ist, dass die äußeren Rillen geometrisch mit den inneren Rillen des Eingriffsendes (44b) übereinstimmen, wenn die entsprechenden konischen Bereiche des Schaufelträgers (22b1) und der Vorrichtung (30d1) geometrisch miteinander übereinstimmen.

11. Einheit nach Anspruch 5, nach Anspruch 4 und nach einem der Ansprüche 8 bis 10, **dadurch gekennzeichnet, dass** die konischen Bereiche (22b1) des Schaufelträgers zwischen dem Organ (22e) oder der Einbuchtung zum winkligen Einstellen (30g), je nachdem, wie das Organ von dem Schaufelträger oder der Vorrichtung getragen wird, und den äußeren Rillen (22c1) angeordnet sind.

12. Verfahren nach einem der Ansprüche 8 bis 11, **dadurch gekennzeichnet, dass** das Eingriffsende (44b') des Exzenters (44') auch konfiguriert ist, um mechanisch auf abnehmbare Weise mit einem unteren Teil (16c) der Nabenmündung gekoppelt zu sein, die der radialen Öffnung dieser Letzteren gegenüber liegt.

13. Einheit nach dem vorhergehenden Anspruch, **dadurch gekennzeichnet, dass** das Eingriffsende (44b') des Exzenters eine Einheit mit doppelter konzentrischer zylindrischer Wand umfasst, die an ihrem oberen Teil in Richtung der radialen Öffnung der Mündung offen ist und einerseits eine erste äußere Wand (44b1') umfasst, die mechanisch auf abnehmbare Weise mit dem unteren Teil (16c') der Mündung gekoppelt ist, und andererseits eine zweite innere Wand (44b2'), die auf ihrer inneren Seite mit Rillen (d) versehen ist, die konfiguriert sind, um sich mit den äußeren Rillen (22c1') des unteren Teils des Schaufelträgers zu verzahnen.

14. Gebläse einer Turbomaschine (10), **dadurch gekennzeichnet, dass** es eine Einheit zum variablen Einstellen für das Gebläse einer Turbomaschine nach einem der Ansprüche 5 bis 13 umfasst.

15. Gebläse einer Turbomaschine nach dem vorhergehenden Anspruch, **dadurch gekennzeichnet, dass** das Gebläse eine Vielzahl von Bläserschaufeln (12) umfasst, die jeweils auf einen Schaufelträger (22) eines Montagemoduls (20) einer Nabenmündung (16) montiert sind.

16. Turbomaschine, umfassend ein Gebläse nach Anspruch 14 oder 15.

## Claims

1. A module for mounting a turbomachine fan blade comprising:
- a blade force take-up device (24),
- a blade support (22) intended to support a fan blade (12) and able to pivot about a radial axis (A), the blade support being configured to be engaged axially along the radial axis (A) inside the blade force take-up device (24), the blade support (22) and the blade force take-up device (24) being mutually configured to ensure, on the one hand, a clamping of the blade support against the device and, on the other hand, an axial retention along the radial axis (A) of the blade support inside the device in order to prevent any movement of axial disengagement of the blade support relative to the device, the blade support and the device each including, on their respective surfaces intended to cooperate with each other, an alternation of conical seats (22b1, 30d1) and recesses (22b2, 30d2) making it possible alternatively, on the one hand, when the recesses of one of the two respective surfaces are in geometric correspondence with the conical seats of the other surface, to axially slide the blade support (22) relative to the device (24) and, on the other hand, when the conical seats of the two respective surfaces are in geometric correspondence with each other, to prevent any axial sliding movement of the blade support relative to the device.

2. The mounting module according to claim 1, **characterized in that** the blade force take-up device (24) comprises an intermediate interface piece (30) which includes, on an inner surface, a first plurality of conical seats (30d1) disposed alternately with recesses (30d2) circumferentially and coaxially with the radial axis (A) of the blade support (22), the conical seats (30d1) being oriented such that the top of the cone of each seat is directed towards a radial opening (16a) of the blade support (22).

3. The mounting module according to claim 2, **characterized in that** the blade support (22) includes, on an outer surface, a second plurality of conical seats (22b1) disposed alternately with recesses (22b2) circumferentially and coaxially with the radial axis (A) of the blade support (22), the conical seats (22b1) of the second plurality of conical seats having the same orientation as that of the first plurality of conical seats (30d1).

4. The mounting module according to any of the preceding claims, **characterized in that** it includes at least one angular setting member (22e) on a first of the two elements among the blade support (22) and the device (24), said at least one angular setting member being intended to cooperate with an angular setting pocket (30g) arranged on the second element and extending transversely relative to the radial axis (A).

5. A variable-setting assembly for a turbomachine fan, comprising:
- a hub (14) extending circumferentially about a longitudinal axis of rotation (X-X') of the hub and comprising a plurality of hub mouths (16) distributed circumferentially on an outer periphery of the hub, each hub mouth (16) internally delimiting an opening (16a) oriented radially relative to the longitudinal axis and allowing access to the inside of the hub mouth,
- for each hub mouth (16), a module (20) for mounting a fan blade according to any of the preceding claims.

6. The assembly according to the preceding claim, **characterized in that** it includes an eccentric system (44) for controlling the pivoting of the blade support (22), which is configured to control the pivoting of the blade support (22) about the radial axis (A) of the hub mouth (16).

7. The assembly according to the preceding claim, **characterized in that** the eccentric system (44) for controlling the pivoting of the blade support comprises a piece forming an eccentric (44) which is configured to engage with a lower part (22c) of the blade support which is opposite to an upper part (22a) of the blade support disposed in a radial position remote from the longitudinal axis (X-X') and intended to receive a fan blade.

8. The assembly according to the preceding claim, **characterized in that** the lower part (22c) of the blade support carries outer splines (22c1) which are configured to mesh with inner splines of an engagement end (44b; 44b') of the eccentric.

9. The assembly according to the preceding claim, **characterized in that** the engagement end (44b) of the eccentric has the general shape of a cylindrical pad open at its upper part oriented towards the radial opening of the mouth and which is provided, on its internal surface, with the inner splines.

10. The assembly according to claim 8 or 9, **characterized in that** the outer splines (22c1) of the lower part of the blade support are disposed at a distance, taken along the radial axis (A), from the conical seats (22b1) of the blade support which is such that the outer splines are in geometric correspondence with the inner splines of the engagement end (44b) when the respective conical seats of the blade support (22b1) and of the device (30d1) are in geometric correspondence with each other.

11. The assembly according to claim 5, taken according to claim 4, and according to any of claims 8 to 10, **characterized in that** the conical seats (22b1) of the blade support are disposed between the angular setting member (22e) or angular setting pocket (30g), depending on whether the member is carried by the blade support or the device, and the outer splines (22c1).

12. The assembly according to any of claims 8 to 11, **characterized in that** the engagement end (44b') of the eccentric (44') is also configured to be removably mechanically coupled with a lower part (16c') of the hub mouth which is opposite to the radial opening of the latter.

13. The assembly according to the preceding claim, **characterized in that** the engagement end (44b') of the eccentric includes an assembly of double concentric cylindrical wall open at its upper part towards the radial opening of the mouth and comprising, on the one hand, a first outer wall (44b1') which is removably mechanically coupled with the lower part (16c') of the mouth and, on the other hand, a second inner wall (44b2') which is provided on its inner face with the splines (d) configured to mesh with the outer splines (22c1') of the lower part of the blade support.

14. A turbomachine fan (10), **characterized in that** it comprises a variable-setting assembly for a turbomachine fan according to any of claims 5 to 13.

15. The turbomachine fan according to the preceding claim, **characterized in that** the fan comprises a plurality of fan blades (12) each mounted on a blade support (22) of a mounting module (20) of a hub mouth (16).

16. A turbomachine comprising a fan according to claim 14 or 15.
